# DEMANDE DE BREVET EUROPEEN

(11) **EP 0 949 827 A1**
(43) Date de publication de la demande: **13.10.1999**
(21) Numéro de dépôt: 99200992.8
(22) Date de dépôt: 30.03.1999
(51) Int. Cl.: H04Q 7/22

(54) **Equipment téléphonique, système de communications radio et procédé d'identification de l'appelant**

(30) Priorité: 07.04.1998 FR 9804321
(71) Demandeur: Koninklijke Philips Electronics N.V., 5621 BA Eindhoven (NL)
(72) Inventeur: Sauvaire, Franck, 75008 Paris (FR)
(74) Mandataire: Chaffraix, Jean

(57) **Abrégé**

L'invention permet de fournir automatiquement à une partie appelée une information d'identification de la partie appelante à la réception de messages courts de type SMS. Cette information d'identification est directement copiée dans le message court préenregistré, de préférence à partir d'un fichier de données personnelles de type MSISDN contenu dans une carte de mémoire amovible de type carte SIM, insérée de façon connue dans l'équipement téléphonique de la partie appelante.

## Description

L'invention concerne un équipement téléphonique comportant des moyens d'émission radioélectriques de messages courts préprogrammés vers une partie appelée.

Elle concerne également un système de télécommunications radioélectriques comportant au moins une partie appelante et une partie appelée, la partie appelante comportant des moyens d'émission de messages courts préprogrammés et la partie appelée comportant des moyens de réception et des moyens de visualisation de ces messages.

L'invention concerne enfin un procédé d'identification de l'appelant utilisé dans un système de télécommunications comportant une partie appelante et une partie appelée pour fournir à la partie appelée une information d'identification de la partie appelante à l'aide d'un message court préprogrammé.

Elle a de nombreuses applications notamment dans les systèmes de radiotéléphonie mobile conformes à des normes de type GSM (de l'anglais Global System for Mobile communications), GSM1800 et PCS1900 (de l'anglais Personal Communications System) qui prévoient l'utilisation d'une carte de mémoire amovible pour stocker des données personnelles d'identification de l'utilisateur.

L'abrégé japonais publié sous le numéro 9008890 A décrit un équipement téléphonique et un procédé du genre mentionnés dans le préambule pour enregistrer le numéro de téléphone de la partie appelante depuis la partie appelée à l'aide de l'envoi d'un message court à la partie appelante. Ce message est destiné à demander à la partie appelante son numéro d'appel.

Un objet de l'invention est de prévoir des moyens économiques en terme d'utilisation de la bande passante pour fournir à la partie appelée, de façon systématique et automatique, une information d'identification de la partie appelante, sans recourir à la transmission de messages supplémentaires. En effet, le procédé connu préconise l'envoi par la partie appelée à la partie appelante, d'un message court uniquement destiné à récupérer l'identité de la partie appelante. Outre la complexité du mécanisme qui nécessite de décoder l'information d'identité fournie en réponse sous la forme d'impulsions de tonalité, ces échanges de messages encombrent la bande passante.

Pour remédier à ces inconvénients, l'invention prévoit un équipement du genre mentionné dans le préambule, remarquable en ce qu'il comporte des moyens de signature automatique desdits messages pour y insérer une information d'identification.

En insérant systématiquement une signature aux messages envoyés pour identifier l'émetteur à l'arrivée du message, on évite ainsi l'échange de nouveaux messages et on économise des ressources du système.

Selon un mode de réalisation préféré de l'invention, l'information d'identification est stockée dans une carte de mémoire amovible, notamment de type carte SIM (de l'anglais Subscriber Identity Module). Grâce à cette carte personnelle l'utilisateur peut envoyer des messages signés depuis n'importe quel équipement compatible avec la norme de télécommunications utilisée.

Selon une caractéristique importante de l'invention lesdits moyens de signature automatique comprennent des moyens de marquage pour marquer une zone dudit message préprogrammé, des moyens de lecture de ladite information et des moyens de copie pour copier l'information dans la zone marquée.

Selon une autre caractéristique de l'invention, l'équipement est compatible avec une norme de type ETS 300 609, et est remarquable en ce que ladite information est copiée entre cotes dans la zone marquée pour figurer dans une liste de rappel de la partie appelée, selon la norme citée.

De même, l'invention prévoit un système du genre mentionné dans le préambule caractérisé en ce que la partie appelante comporte des moyens de signature automatique desdits messages pour y insérer une information d'identification et en ce que les moyens de signature comprennent des moyens de marquage pour marquer une zone dudit message préprogrammé, des moyens de lecture de l'information et des moyens de copie pour copier ladite information dans la zone marquée.

Enfin, un procédé du genre mentionné dans le préambule est remarquable en ce qu'il est mis en oeuvre par la partie appelante et qu'il comporte une étape d'insertion automatique de ladite information dans ledit message préprogrammé, et une étape d'émission radioélectrique dudit message à la partie appelée.

La description suivante, faite en regard des dessins ci-annexés, le tout donné à titre d'exemple non limitatif fera bien comprendre comment l'invention peut être réalisée.

La figure 1 est un schéma montrant un système de radiocommunications selon l'invention.

La figure 2 est un schéma de principe pour illustrer le fonctionnement d'un équipement téléphonique selon l'invention.

La figure 3 est un organigramme pour illustrer un procédé d'identification de l'appelant selon l'invention.

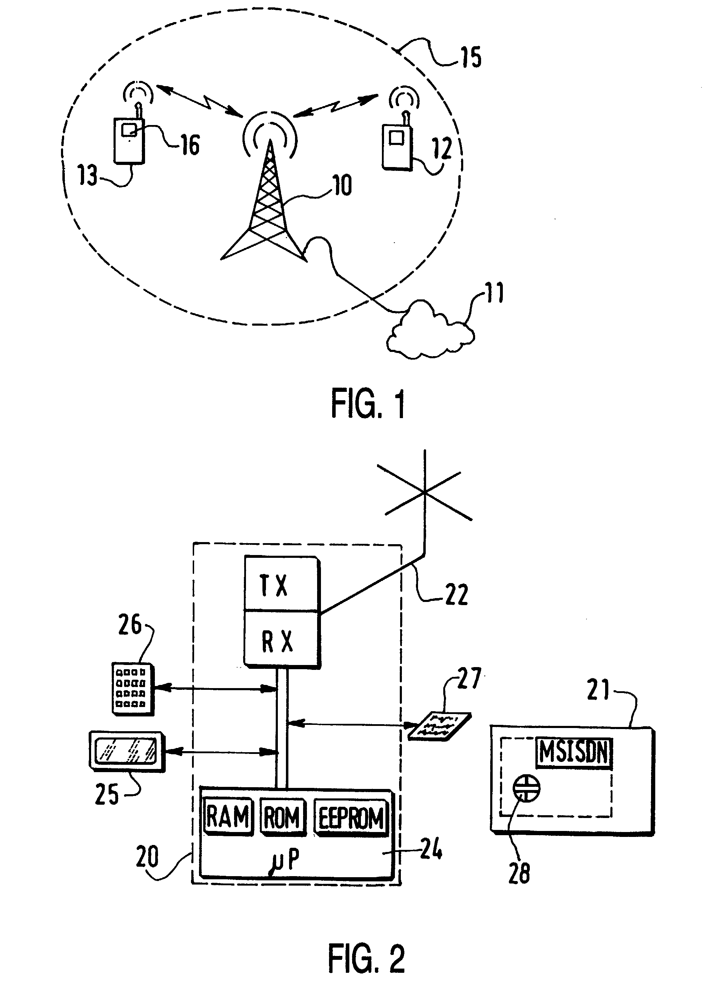

L'exemple de système représenté à la figure 1 est un sous-système radio de type GSM conforme à la recommandation ETS 300 906 de l'ETSI (de l'anglais European Telecommunications Standards Institute). Cependant, l'invention peut avantageusement être mise en oeuvre dans d'autres systèmes de télécommunications permettant de transmettre des messages courts préenregistrés entre une partie appelante et une partie appelée.

Le système comprend une station radio de base 10 reliée au réseau radio mobile GSM 11 et deux stations mobiles 12 et 13, susceptibles de communiquer par voie radioélectrique à l'intérieur d'une zone de couverture radio 15. La station de base 10 réalise l'interface radioélectrique entre le réseau 11 et les stations mobiles 12 et 13.

Dans cet exemple, la station mobile 12, dite partie appelante souhaite envoyer un message court à la station mobile 13, dite partie appelée. Selon la norme GSM, la partie appelante comporte des moyens d'émission de messages courts préenregistrés de type SMS (de l'anglais Short Message Service) et la partie appelée comporte des moyens de réception de ces messages SMS ainsi qu'un écran de visualisation 16 pour permettre à l'utilisateur de les visualiser.

L'appelant a le choix d'enregistrer manuellement un nouveau message (ce qui est long et peu ergonomique à l'aide des radiotéléphones actuels) ou d'envoyer un message déjà préprogrammé dans une liste standard. Cependant, les messages proposés en standard ne permettent pas à l'appelé d'identifier l'émetteur du message. Pour que la partie appelée reconnaisse l'identité de l'appelant, celui-ci doit manuellement enregistrer son message et entrer son numéro de téléphone, de télécopie, son nom ou tout autre information qui permette à l'appelé de l'identifier et éventuellement de lui répondre par téléphone, fax ou autre.

Pour éviter ces manipulations, l'invention propose de doter la partie appelante de moyens de signature automatique des messages préprogrammés pour insérer dans chaque message une information d'identification de l'appelant, sans que celui-ci ait besoin de rentrer manuellement cette information. Ces moyens utilisent les informations personnelles de l'utilisateur contenues dans le fichier MSISDN (de l'anglais Mobile Subscriber Integrated Service Data Network) de sa carte SIM, définis dans la recommandation ETS 300 045 de l'ETSI. Selon le type de message SMS envoyé, l'information d'identification peut être le nom, le numéro de téléphone mobile, le numéro de télécopie ou de réception de données, toutes ces informations étant contenues dans le fichier MSISDN de la carte SIM.

La recommandation ETS 300 906 prévoit qu'une chaîne de caractères entre cotes dans un message SMS est reconnue à la réception par la partie appelée pour être automatiquement stockée dans une liste de rappel. Si la partie appelée comporte des moyens pour extraire l'information entre cotes et l'ajouter à sa liste de rappel, l'invention prévoit de copier l'information entre cotes dans la zone marquée de la partie appelante pour qu'elle soit automatiquement ajoutée à la liste de rappel de la partie appelée au moment de la réception du message.

Le schéma bloc de la figure 2 montre à titre d'exemple un circuit de radiotéléphone 20 destiné à recevoir une carte de mémoire amovible 21 appelée carte SIM, contenant des informations d'identification de l'utilisateur selon la norme GSM.

Il comporte de façon connue des circuits d'émission / réception TX / RX couplés à une antenne 22 pour transmettre des messages SMS à une partie appelée. Les opérations du radiotéléphone sont contrôlées par un organe de contrôle 24 muni d'un microprocesseur µP, d'une mémoire vive ou volatile RAM, d'une mémoire programmable EEPROM et d'une mémoire non volatile ROM qui contient notamment une liste de messages courts préprogrammés. Ces messages préenregistrés peuvent alternativement être stockés dans la carte SIM, si celle-ci l'accepte.

L'organe de contrôle 24 traite les signaux émis et reçus par les circuits d'émission / réception TX / RX et gère une interface utilisateur constituée d'un écran de visualisation 25, d'un clavier 26 et d'un premier circuit de connexion 27 pour la carte SIM. Lorsque la carte est insérée dans le radiotéléphone, le premier circuit de connexion 27 coopère avec un deuxième circuit 28 imprimé sur la carte 21, pour permettre au microprocesseur µP d'accéder aux informations contenues dans les fichiers de la carte SIM.

En particulier, le processeur effectue des opérations de lecture du fichier MSISDN de la carte SIM et des opérations d'écriture dans les mémoires EEPROM et RAM.

Selon une variante de réalisation de l'invention, les informations d'identification de l'appelant (nom, numéro de téléphone ou de fax) sont enregistrées directement en EEPROM si le fichier MSISDN n'existe pas.

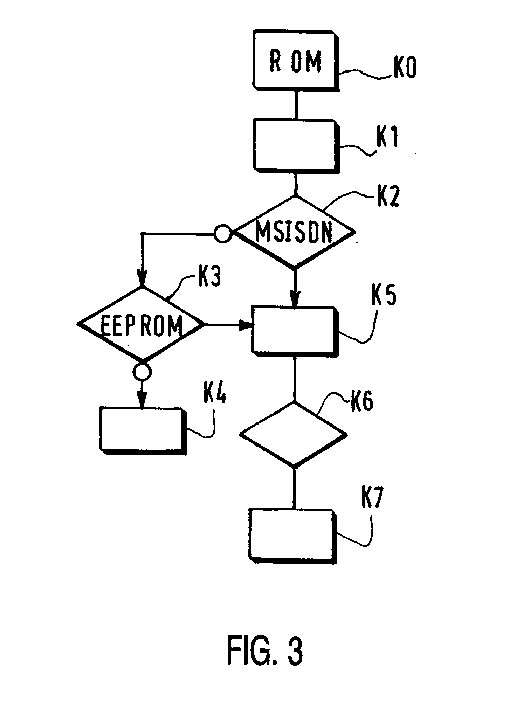

Un procédé pour mettre en oeuvre l'invention va maintenant être décrit à l'aide de la figure 3 dont les cases K0 à K7 illustrent les étapes principales.

La case K0 représente une étape sélection par le microprocesseur d'un message dans la liste de messages préprogrammés stockée par exemple en mémoire ROM. La case K1 illustre une étape de marquage pour indiquer une zone du message dans laquelle l'information d'identification doit être copiée. Le marquage peut être effectué par l'insertion d'un caractère spécial, utilisé uniquement à cette fin. La case K2 représente une étape de test pour vérifier l'existence du fichier MSISDN dans la carte SIM. Si ce fichier n'existe pas, le procédé se poursuit à la case K3 pour rechercher les informations d'identification de l'appelant dans la mémoire programmable EEPROM. Si cette recherche échoue, le procédé se termine à la case K4 où le processeur commande notamment l'affichage d'un message à l'écran pour informer l'utilisateur que le message ne peut pas être signé.

Si le résultat de l'une des étapes K2 ou K3 est positif, on passe à l'étape K5 pour copier l'information contenue dans le fichier MSISDN ou dans l'EEPROM à l'endroit indiqué par le marqueur; c'est-à-dire que l'on remplace, dans le message, le caractère spécial par le contenu du fichier MSISDN ou de l'EEPROM.

La case K6 illustre une étape de test supplémentaire pour savoir si le numéro copié est un numéro de téléphone, de fax, de réception de donnée, etc. A la case K7, en fonction du résultat du test K6, on ajoute dans le message une phrase du type « rappelez-moi au numéro » ou bien « faxez-moi au numéro », devant le numéro copié.

On a ainsi décrit et illustré à l'aide d'exemples un procédé d'identification de l'appelant, un équipement téléphonique doté de moyens de signature de messages courts ainsi qu'un système de télécommunications pour transmettre des messages radioélectriques signés. Bien entendu, des variantes de réalisation pourront être apportées sans sortir du cadre de l'invention, notamment en ce qui concerne la méthode d'insertion de la signature dans le SMS à partir de données enregistrées sur une carte de mémoire amovible ou sur tout autre moyen de stockage et la méthode de programmation préalable des SMS.

## Revendications

1. Equipement téléphonique comportant des moyens d'émission radioélectriques de messages courts préprogrammés vers une partie appelée, caractérisé en ce qu'il comporte des moyens de signature automatique desdits messages pour y insérer une information d'identification.

2. Equipement selon la revendication 1, caractérisé en ce que ladite information est stockée dans une carte de mémoire amovible.

3. Equipement selon l'une des revendications 1 ou 2, caractérisé en ce que lesdits moyens de signature automatique comprennent des moyens de marquage pour marquer une zone dudit message préprogrammé, des moyens de lecture de ladite information et des moyens de copie pour copier l'information dans la zone marquée.

4. Equipement selon l'une des revendications 1 à 3, fonctionnant selon une norme de type ETS 300 609, caractérisé en ce que ladite information est copiée entre cotes dans la zone marquée pour figurer dans une liste de rappel de la partie appelée.

5. Système de télécommunications radioélectriques comportant au moins une partie appelante et une partie appelée, la partie appelante comportant des moyens d'émission de messages courts préprogrammés et la partie appelée comportant des moyens de réception et des moyens de visualisation de ces messages,
caractérisé en ce que :
• la partie appelante comporte des moyens de signature automatique desdits messages pour y insérer une information d'identification,
• les moyens de signature comprennent :
- des moyens de marquage pour marquer une zone dudit message préprogrammé,
- des moyens de lecture de l'information et
- des moyens de copie pour copier ladite information dans la zone marquée.

6. Système de télécommunications selon la revendication 5, caractérisé en ce que ladite information est stockée dans une carte de mémoire amovible.

7. Système de télécommunications selon l'une des revendications 5 ou 6, conforme à une norme de type ETS 300 609, caractérisé en ce que ladite information est copiée entre cotes dans la zone marquée pour figurer dans une liste de rappel de la partie appelée.

8. Procédé d'identification de l'appelant utilisé dans un système de télécommunications comportant une partie appelante et une partie appelée pour fournir à la partie appelée une information d'identification de la partie appelante à l'aide d'un message court préprogrammé,
caractérisé en ce qu'il est mis en oeuvre par la partie appelante et qu'il comporte une étape d'insertion automatique de ladite information dans ledit message préprogrammé, et une étape d'émission radioélectrique dudit message à la partie appelée.

9. Procédé selon la revendication 8, caractérisé en ce que l'étape d'insertion automatique comprend les sous-étapes suivantes :
• une sous-étape de marquage pour marquer une zone dudit message,
• une sous-étape de lecture de ladite information et
• une sous étape de copie pour copier ladite information dans la zone marquée.

10. Procédé selon l'une des revendications 8 ou 9, caractérisé en ce que ladite information est stockée dans une carte de mémoire amovible.

11. Procédé selon la revendications 10, mis en oeuvre par une partie appelante utilisant un système de radiocommunications conforme à une norme de type ETS 300 609, la carte de mémoire amovible étant du type carte SIM (de l'anglais Subscriber Identity Module),
caractérisé en ce que ladite information est contenue dans le fichier MSISDN (de l'anglais Mobile Subscriber Integrated Service Data Network) de la carte SIM et en ce que l'information est insérée entre cotes dans ledit message pour être ajoutée à la liste de rappel de la partie appelée.
